# EUROPEAN PATENT SPECIFICATION

(11) **EP 2 292 683 B1**
(45) Date of publication and mention of the grant of the patent: **12.12.2012**
(21) Application number: 10183423.2
(22) Date of filing: 01.09.2005
(51) Int. Cl.: C08J 9/00, C08J 9/14, C08J 9/04, C08K 5/101

(54) **Expanded and Extruded Thermoplastic Foams made wth Methyl Formate-Based Blowing Agents**
Thermoplastische Schäume unter Mitwirkung von Methylformiat als Blähmittel
Mousses thermoplastiques expansées et extrudées fabriquées à partir d'agents d'expansion à base de formate de méthyle

(30) Priority: 03.09.2004 US 934832; 17.12.2004 US 16312; 03.05.2005 US 122158; 13.06.2005 US 151814
(43) Date of publication of application: 09.03.2011
(62) Divisional of application: 05796408.2
(73) Proprietor: Pactiv Corporation, Lake Forest, IL 60045 (US)
(72) Inventor: Handa, Yash Paul, North Carolina NC 28277 (US)
(74) Representative: Lawrence, John

(56) References cited:
- EP-A1- 0 377 230
- EP-A1- 0 657 495
- EP-A2- 0 450 422
- US-A- 5 166 182
- US-A- 5 283 003

## Description

### FIELD OF INVENTION

The present invention relates generally to foams using environmentally benign blowing agents, and processes of making the same. Particularly, the present invention relates to thermoplastic polymer foams using methyl formate-based blowing agents, that produce stable foams, and processes of making the same. The thermoplastic polymer foams are particularly suitable for various packaging applications in the form of foam expanded beads or extruded sheets and the articles made therefrom, and for insulation applications such as insulation boards in building materials.

### BACKGROUND OF THE INVENTION

Thermoplastic foams made from alkenyl aromatic polymers (e.g. polystyrene) or polyolefin polymers (e.g. polyethylene and polypropylene) have found extensive use, particularly as packaging and insulating materials. Alkenyl aromatic polymer foams in the form of beads or sheets having a thickness of less than about one-half inch (1.3 cm) are used to make packaging materials such as containers (cups, bowls, clamshells, picnic chests) for hot or cold beverages or food, and for protection during transportation of delicate or shock sensitive articles whereby the beads are fused or the sheet is thermoformed in a mold to give the packaging material of desired shape. The foam beads are also used as loose fill dunnage material. Generally, insulating foams are produced in thickness greater than about one-half inch (1.3 cm). The insulating value of such foams is measured in terms of heat conduction resistance or R-value, per one inch of foam thickness. Adequate insulating foams typically have R-values of about 4.0 per inch or greater (about 1.6 per cm). Packaging and insulation foam products with thickness greater than about 0.5 inch (1.3 cm) are called planks or boards. It is desirable that foams be dimensionally stable; this characteristic is even more desirable for planks or boards.

These and other polymer foams are commonly made using a continuous process where a blowing agent laden molten resin is extruded under pressure through an appropriate die into a lower pressure atmosphere. Alternatively, a batch or staged process can be used, where small polymer beads (also called particles or pellets) are impregnated with blowing agent and then heated rapidly to a temperature near or above the glass transition temperature of the polymer-blowing agent system, or subjected to an external compressive stress at a temperature up to the glass transition temperature of the polymer-blowing agent system.

Presently, physical blowing agents more commonly used for making thermoplastic polymer foams such as alkenyl aromatic polymer (e.g. polystyrene) or polyolefin polymer (e.g. polyethylene or polypropylene) foams are hydrocarbons, chlorinated hydrocarbons, hydrochlorofluorocarbons, hydrofluorocarbons, or combinations thereof. Hydrocarbons with three or more carbon atoms are considered volatile organic compounds (VOCs) that can lead to formation of smog. Furthermore, some halogenated hydrocarbons are either VOCs or have high ozone depletion potential (ODP) or are hazardous air pollutants (HAPs) and, at times, may fall into more than one of these categories. Therefore, the use of hydrocarbon and halogenated hydrocarbon blowing agents for preparing polymeric foams is not preferred environmentally and imposes many limitations on the manufacturing process, thus complicating and significantly increasing the cost of manufacturing. For example, alkenyl aromatic polymer (e.g., polystyrene) packaging foams (beads or sheets) are generally made using VOCs such as butanes or pentanes, and insulating foams are currently made using VOCs such as hydrocarbons and halogenated hydrocarbons or non-VOCs such as 1-chloro-1,1-difluoroethane (HCFC-142b), alone or in combination with ethyl chloride, which is classified both as a VOC and a HAP. It is therefore desirable to minimize or eliminate altogether the use of VOC and/or HAP compounds as blowing agents for preparing polymeric foams.

Methyl formate is classified as a non-VOC (Federal Register, Volume 69, Number 228, Nov. 29, 2004), is non-HAP, and has zero ODP. U.S. Pat. No. 6,753,357 describes the use of methyl formate to produce stable, rigid isocyanate/polyol based polyurethane foams. It is noted, however, that such polyurethane foams are thermoset, so as to be made via a crosslinking and curing process. The dimensional stability or instability imparted to the final polyurethane foam product by the nature of the blowing agent therefore is quite different than in the case of thermoplastic polymer foams.

Therefore, a need exists for blowing agents employing methyl formate and environmentally friendly co-blowing agents, preferably non-VOC and/or non-HAP co-blowing agents, as components of the blowing agent blend to produce stable thermoplastic foams, without compromising the product quality in terms of appearance, mechanical or compressive strength, and insulation value, and that enable a cost-effective and versatile manufacturing process.

US patent 5 283 003 describes a blowing agent composition and method of use that is not destructive to the ozone while producing a polyurethane integral skin foam product having high dimensional stability with minimal or no shrinkage.

European patent application EP 0 657 495 describes a halogen-free blowing agent is used to produce isocyanate-based polymeric foams. The blowing agent is an organic liquid which is free from halogens and contains a positive binary azeotrope having a minimum boiling temperature in a range of about 15°C to about 80°C at normal atmospheric pressure.

US patent 5 166 182 describes blowing agents and blowing agent mixtures for preparing a cellular thermosetting plastic foam.

### SUMMARY OF THE INVENTION

According to an aspect of the present invention, there is provided a blowing agent formulation according to claim 1 of the appended claims. Generally, foam sheets or beads have a thickness of less than about 0.5 inch (1.3 cm); and the insulating foam boards have a thickness of at least about an inch (2.5 cm).

According to an embodiment of the invention, an expandable polymeric formulation is used to prepare an expanded thermoplastic polymer foam structure. The formulation includes a thermoplastic polymer and a blowing agent, according to the invention. Various embodiments of the invention are set out according to the appended dependent claims

According to another embodiment, a thermoplastic polymer foam structure is prepared by melting a thermoplastic polymer, mixing (e.g., dissolving, impregnating or entrapping) an effective amount of blowing agent, and extruding the compressed mixture through an appropriate die into a low pressure zone to form a foam sheet or a board, or into a low temperature zone to form expandable beads. In another aspect of this embodiment, the expandable beads are prepared by dissolving an effective amount of blowing agent into the thermoplastic polymer. In a further embodiment, the expandable beads are prepared by synthesizing the polymer in the presence of the blowing agent so as to dissolve, impregnate or entrap the blowing agent in the polymer. The polymer can be in the form pellets, preferably of size about 0.1 inchx0.1 inch (0.25 cm x 0.25 cm), beads or particles. The expanded foam structure is then obtained by rapidly heating the expandable beads to a temperature near or above the glass transition temperature of the polymer-blowing agent formulation, to form foamed beads, which can be used as such or further compression molded into desired shapes and thickness. In another embodiment, the expanded foam structure is obtained by subjecting the beads to an external compressive stress at a temperature up to the glass transition temperature of the polymer-blowing agent formulation. In a preferred embodiment, the thermoplastic polymer foam structure is an alkenyl aromatic polymer foam structure. In a more preferred embodiment, the alkenyl aromatic polymer foam is an expanded polystyrene foam structure (EPS) or an extruded polystyrene foam structure (XPS), either of which is used as packaging and insulation foams. Generally, foam sheets or beads have a thickness of less than about 0.5 inch (1.3 cm); the insulating foam boards have a thickness of at least about 0.5 inch (1.3 cm), preferably about 0.5 inch to about 3 inch (1.3 - 7.6 cm), and have R-values of about 4.0 per inch (1.6 per cm) or greater.

According to a process embodied by the present invention, a thermoplastic polymer foam structure is prepared by melting a thermoplastic polymer, mixing (e.g., dissolving, impregnating or entrapping) an effective amount of blowing agent, and extruding the compressed mixture through an appropriate die into a low pressure zone to form a foam sheet or a board, or into a low temperature zone to form expandable beads. In another aspect of this embodiment, the expandable beads are prepared by dissolving an effective amount of blowing agent into the thermoplastic polymer. In a further aspect, the expandable beads are prepared by synthesizing the polymer in the presence of the blowing agent so as to dissolve, impregnate or entrap the blowing agent in the polymer. The polymer can be in the form pellets, preferably of size about 0.1 inchx0.1 inch (0.25 x 0.25 cm), beads or particles. The expanded foam structure is then obtained by rapidly heating the expandable beads to a temperature near or above the glass transition temperature of the polymer-blowing agent formulation, to form foamed beads, which can be used as such or further compression molded into desired shapes and thickness. In another embodiment, the expanded foam structure is obtained by subjecting the beads to an external compressive stress at a temperature up to the glass transition temperature of the polymer-blowing agent formulation. In a preferred embodiment, the thermoplastic polymer foam structure is an alkenyl aromatic polymer foam structure. In a more preferred embodiment, the alkenyl aromatic polymer foam is an expanded polystyrene foam structure (EPS) or an extruded polystyrene foam structure (XPS), either of which is used as packaging and insulation foams. Generally, the foam sheets or beads have a thickness of less than about 0.5 inch (1.3 cm); the insulating foam boards have a thickness of at least about 0.5 inch (1.3 cm), preferably about 0.5 inch to about 3 inch (1.3 - 7.6 cm), and have R-values of about 4.0 per inch (1.6 per cm) or greater.

The polymer foam structure obtained by the process of the present invention preferably is a substantially closed-cell and dimensionally-stable structure. In a preferred embodiment, the alkenyl aromatic foam structure includes a polystyrene polymer.

The inventive formulations and methods of the present invention employ blowing agents containing environmentally friendly non-VOC and non-HAP species, and thus offer significant advantages as compared with presently used blowing agents.

According to an embodiment of the invention, there is provided an expandable polymeric formulation for the preparation of an expanded alkenyl aromatic polymer foam structure, the formulation including a thermoplastic alkenyl aromatic polymer and a blowing agent, the blowing agent including methyl formate.

The expandable polymeric formulation may be in the form of expandable beads.

The blowing agent may be a blend including from about 1 mol% to about 99 mol% methyl formate, and further including at least one co-blowing agent. The at least one co- blowing agent may be a physical co-blowing agent, a chemical co-blowing agent, or a combination thereof. The at least one co- blowing agent may be a physical co-blowing agent selected from the group consisting of an inorganic agent, a hydrocarbon, a halogenated hydrocarbon, an ether, an ester, an acetal, an alkanol, a carbonate, an amine, a ketone, and any combination thereof. The physical co-blowing agent may be selected from the group consisting of a hydrocarbon containing four or five carbon atoms, 1,1,1,2-tetrafluoroethane (HFC-134a) and 1-chloro-1,1-difluoroethane (HCFC-142b).

The alkenyl aromatic polymer may include polystyrene.

According to another embodiment of the invention, an expanded alkenyl aromatic polymer foam structure is formed by: preparing an expandable polymeric formulation including a thermoplastic alkenyl aromatic polymer and a blowing agent, the blowing agent including methyl formate; and expanding the formulation to form the expanded alkenyl aromatic foam structure.

The expandable polymeric formulation may be in the form of expandable beads. The expandable beads may be formed by a process selected from the group consisting of (a), (b), and (c):
a.
   (i) melting a thermoplastic alkenyl aromatic polymer;
   (ii) mixing an effective amount of the blowing agent in the alkenyl aromatic polymer to define a mixture; and
   (iii) extruding the mixture to form the expandable beads;
b. dissolving an effective amount of the blowing agent into the alkenyl aromatic polymer;
c. synthesizing the alkenyl aromatic polymer in the presence of the blowing agent.

The step of expanding the beads may include heating the beads to a temperature at least at or above the glass transition temperature of the polymer-blowing agent formulation; or subjecting the beads to an external compressive stress at a temperature up to the glass transition temperature of the polymer-blowing agent formulation.

The expanded beads may be further molded into a contoured shape.

The blowing agent may be a blend including from about 1 mol% to about 99 mol% methyl formate, and further including at least one co-blowing agent. The at least one co-blowing agent may be a physical co-blowing agent, a chemical co-blowing agent, or a combination thereof. The at least one co-blowing agent may be a physical co-blowing agent selected from the group consisting of an inorganic agent, a hydrocarbon, a halogenated hydrocarbon, an ether, an ester, an acetal, an alkanol, a carbonate, an amine, a ketone, and any combination thereof. The physical co- blowing agent may be selected from the group consisting of a hydrocarbon containing four or five carbon atoms, 1,1,1,2-tetrafluoroethane (HFC-134a) and 1-chloro-1,1-difluoroethane (HCFC-142b.

The alkenyl aromatic polymer foam may include polystyrene.

The alkenyl aromatic polymer foam may have a density of about 1 to 15 lb/ft³ (16 to 240 kgs/m³)

The alkenyl aromatic polymer foam structure may be an insulating foam having a thickness of at least about 0.5 inch (1.3 cm) and an R value of about 4 per inch (1.6 per cm) or greater.

The alkenyl aromatic polymer foam structure may comprise a substantially closed-cell structure.

According to another embodiment of the invention a process for making an expanded alkenyl aromatic polymer foam structure includes: preparing an expandable polymeric formulation including a thermoplastic alkenyl aromatic polymer and a blowing agent formulation according to the appended claims and expanding the formulation to form the expanded alkenyl aromatic foam structure.

The expandable polymeric formulation may be in the form of expandable beads.

The expandable beads may be formed by a process selected from the group consisting of (a), (b), and (c):
a.
   (i) melting a thermoplastic alkenyl aromatic polymer;
   (ii) mixing an effective amount of the blowing agent in the alkenyl aromatic polymer to define a mixture; and
   (iii) extruding the mixture to form the expandable beads;
b. dissolving an effective amount of the blowing agent into the alkenyl aromatic polymer; c. synthesizing the alkenyl aromatic polymer in the presence of the blowing agent.

The step of expanding the beads may include heating the polymer-blowing agent formulation to a temperature at or above the glass transition temperature of the polymer-blowing agent formulation; or subjecting the beads to an external compressive stress at a temperature up to the glass transition temperature of the polymer-blowing agent formulation.

The process may further incude the step of forming a contoured shape from the expanded beads.

The blowing agent may be a blend including from about 1 mol% to about 99 mol% methyl formate, and further including at least one co-blowing agent.

The at least one co-blowing agent may be a physical co-blowing agent, a chemical co-blowing agent, or a combination thereof. The at least one co-blowing agent may be a physical co- blowing agent selected from the group consisting of an inorganic agent, a hydrocarbon, a halogenated hydrocarbon, an ether, an ester, an acetal, an alkanol, a carbonate, an amine, a ketone, and any combination thereof. The physical co-blowing agent may be selected from the group consisting of a hydrocarbon containing four or five carbon atoms, 1,1,1,2- tetrafluoroethane (HFC-134a) and 1-chloro-1,1-difluoroethane (HCFC-142b).

The alkenyl aromatic polymer foam may include polystyrene.

The alkenyl aromatic polymer foam may have a density of about 1 to 15 lb/ft³ (16 to 240 kg/m³).

The alkenyl aromatic polymer foam structure may have an insulating foam having a thickness of at least about 0.5 (1.3 cm) inch and an R value of about 4 per inch (1.3 - 7.6 cm) or greater.

The alkenyl aromatic polymer foam structure may comprise a substantially closed-cell structure.

### BRIEF DESCRIPTION OF THE DRAWINGS

FIG. 1 is a schematic flow diagram of an overall sequence of operations involved in the manufacture of an extruded foam sheet according to one embodiment of the present invention;
FIG. 2 is a schematic flow diagram of an overall sequence of operations involved in the manufacture of expandable beads according to one embodiment of the present invention;
FIG. 3 is a schematic diagram of an overall sequence of operations involved in the manufacture of foam beads and articles made therefrom according to one embodiment of the present invention; and
FIG. 4 is a schematic flow diagram of an overall sequence of operations involved in the manufacture of an extruded foam board or plank according to one embodiment of the present invention.

While the invention is capable of various modifications and alternative forms, specific embodiments thereof have been shown by way of example in the drawing and will herein be described in detail. It should be understood, however, that it is not intended to limit the invention to the particular forms disclosed but, on the contrary, the intention is to cover all modifications, equivalents, and alternatives falling within the scope of the invention as defined by the appended claims.

### DESCRIPTION OF ILLUSTRATIVE EMBODIMENTS

The effectiveness of a blowing agent depends on its solubility in the polymer and its ability to expand the polymer-blowing agent solution when such a solution is subjected to thermodynamic instability such as when the solution exits a die attached to an extruder (to provide the extrudate) or when the blowing agent laden polymer is rapidly heated. The expansion of the polymer-blowing agent solution depends on the difference between the glass transition temperature of the thermoplastic polymer Tg and the boiling point of the blowing agent Tb. In general, the solubility of the blowing agent in the polymer depends on the difference between Tg and Tb (Tg-Tb); the smaller the difference the higher the solubility. Since volatility follows an inverse relationship with Tb, it is understood that at the same conditions of temperature and pressure, a higher volatility blowing agent will have lower solubility compared to a lower volatility blowing agent. As such, by blending a lower volatility blowing agent with a higher volatility blowing agent, a foaming formulation with optimized solubility and expandability characteristics can be developed. Furthermore, by blending a currently used VOC or HAP blowing agent with a non-VOC and non-HAP blowing agent of similar volatility, the emissions can be reduced without sacrificing the solubility and expandability characteristics.

The foams and processes of the present invention employ blowing agent(s) to achieve a stable thermoplastic polymer foam. The blowing agent used in the present invention includes methyl formate, which is non-VOC and non-HAP, and has zero ODP. Hence, eliminating HAPs and minimizing and minimizing the propensity to smog formation from the manufacturing process and the foam resulting therefrom is not only environmentally friendly, but also avoids many of the disadvantages of currently employed blowing agent compositions and processes. Thus, methyl formate alone or in combination with one or more suitable blowing agents having similar environmental attributes and, additionally, low thermal conductivity, can help offset the harmful environmental impacts (ODP, HAP, VOC) associated with the blowing agents in current use.

Resins that can be foamed in accordance with the present invention include melt processable thermoplastic polymers such as alkenyl aromatic polymers, polyolefins, polycarbonates, polyacrylates, and others. The term thermoplastic polymer includes both amorphous and semi-crystalline polymers. Examples of amorphous thermoplastic polymers include but are not limited to polystyrene, polycarbonate, poly(methyl methacrylate) and poly(phenylene oxide). Examples of semi-crystalline thermoplastic polymers include but are not limited to polyethylene, polypropylene, syndiotactic-polystyrene, poly(ethylene terephthalate).

A preferred embodiment of the present invention relates to alkenyl aromatic polymers. The term "alkenyl aromatic polymer" as used herein, includes polymers of aromatic hydrocarbon molecules that contain an aryl group joined to an olefinic group with only double bonds in the linear structure, such as styrene, or styrene homologs such as [alpha]-methylstyrene, o-, m- and p-methylstyrene, [alpha]-ethylstyrene, o-, m-, p-ethylstyrene, 2,4-dimethylstyrene, [alpha]-vinylxylene, vinyl toluene and the like. Alkenyl aromatic polymers also include homopolymers of styrene or styrene homologs (commonly referred to as polystyrene), copolymers of styrene, and rubber-toughened polystyrene (commonly referred to as high impact polystyrene, HIPS). With respect to a styrene copolymer, the comonomer generally can be any other ethylenically unsaturated material such as the conjugated 1,3-dienes, e.g., butadiene, isoprene, alpha-beta-unsaturated monocarboxylic acids and derivatives thereof, e.g., acrylic acid, methyl acrylate, ethyl acrylate, butyl acrylate, 2-ethylhexyl acrylate, and the corresponding esters of methacrylic acid, acrylamide, methacrylamide, acrylonitrile, methacrylonitrile, etc. If desired, blends of a styrene polymer with other polymers can be employed, e.g., blends of a styrene polymer with polyphenylene oxide. Preferably, the copolymers contain a predominant portion of styrene, for example greater than about 50 wt % styrene, and more preferably greater than 75% styrene.

The blowing agent includes from about 1 mol % to about 100 mol % methyl formate. In one embodiment, the blowing agent includes 100 mol % methyl formate. In another embodiment, however, the blowing agent is a blend including less than 100 mol % methyl formate, and further including at least one co-blowing agent. It is contemplated that more than one co-blowing agent can be employed in the blowing agent blend. Such co-blowing agent(s) can be physical, chemical or combinations thereof. The composition of the blowing agent blend depends on the foamed structure being prepared. In one embodiment, when the foamed structure is a sheet or expandable bead, the blowing agent blend includes from about 1 mol % to about 100 mol % methyl formate. In another embodiment, however, when the foamed structure is an expandable bead, a sheet, a board or plank, the blowing agent blend includes from about 1 mol % to about 99 mol % methyl formate, and at least one co-blowing agent. Such co-blowing agent(s) can be physical, chemical or combinations thereof. The co-blowing agent generally is either fast expanding or has similar expansion characteristics as compared to pure methyl formate. The co-blowing agent can be an organic compound or an inorganic compound. Preferably, the co-blowing agent is a non-VOC. Still preferably, the co-blowing agent is a non-HAP. More preferably, the co-blowing agent is both a non-VOC and a non-HAP. Some non-limiting examples of physical co-blowing agents include, but are not limited to, inorganic agents, organic agents (e.g. hydrocarbons, halogenated hydrocarbons, ethers, esters, acetals, alkanols, carbonates, amines and ketones), or any combination thereof.

Some-suitable inorganic physical blowing agents include, but are not limited to, carbon dioxide, water, air, nitrogen, argon, xenon, sulfur hexafluoride, nitrous oxide, ammonia, silicon tetrafluoride, nitrogen trifluoride, boron trifluoride, and boron trichloride, or any combination thereof. In one currently preferred embodiment, the inorganic agent is an inorganic gas such as carbon dioxide, nitrogen, argon, or air. A currently preferred inorganic gas is carbon dioxide. In another currently preferred embodiment, the inorganic agent is water.

Some examples of organic physical co-blowing agents that can be used in the present invention include, but are not limited to, hydrocarbons, halogenated hydrocarbons, fluids with polar groups such as ethers, esters, acetals, carbonates, alkanols, amines and ketones, and combinations thereof. Examples of hydrocarbons include, but are not limited to, methane, ethane, propane, cyclopropane, normal- or iso-butane, cyclobutane, neopentane, normal- or iso-pentane, and cyclopentane or any combination thereof. Examples of currently preferred halogenated hydrocarbons include, but are not limited to, methyl fluoride, difluoromethane (HFC-32), trifluoromethane (HFC-23), perfluoromethane, chlorodifluoromethane (HCFC-22), methylene chloride, ethyl chloride, ethyl fluoride, 1,2-difluoroethane (HFC-152), 1,1-difuoroethane (HFC-152a), 1,1,1-trifluoroethane (HFC-143a), 1,1,1,2-tetrafluoroethane (HFC-134a), pentafluoroethane (HFC-125), perfluoroethane, 1,1-dichloro-1-fluoroethane (HCFC-141b), 1-chloro-1,1-difluoroethane (HCFC 142b), 1,1-dichloro-2,2,2-trifluoroethane (HCFC-123), and 1-chloro-1,2,2,2-tetrafluoroethane (HCFC-124), difluoropropane, 1,1,1-trifluoropropane, 1,1,1,3,3-pentafluoropropane 1,1,1,2,3,3,3-heptafluoropropane (HFC-227ea), perfluoropropane, 2,2,4,4,4-pentafluorbutane (HFC-365mfc), perfluorobutane, perfluorocyclobutane, and vinyl fluoride, or any combination thereof. Fluids with polar groups include but are not limited to ethers such as dimethyl ether, vinyl methyl ether, methyl ethyl ether, dimethyl fluoroether, diethyl fluoroether, and perfluorotetrahydrofuran; amines such as dimethylamine, trimethylamine and ethylamine; ketones such as acetone and perfluoroacetone; esters such as ethyl formate and methyl acetate; acetals such as methylal; carbonates such as dimethyl carbonate; alkanols such as ethanol and isopropanol, or any combination thereof. Currently preferred organic physical co-blowing agents are hydrocarbons containing four or five carbon atoms, HCFC-142b, and HFC-134a.

Chemical co-blowing agents are compounds which undergo a chemical reaction, for example decomposition to produce an inorganic gas such as CO2 or N2 and CO. Non-limiting examples of suitable chemical co-blowing agents include azodicarbonamide, azodiisobutyronitrile, benzenesulfonylhydrazide, 4,4'-oxybis (benzene sulfonylhydrazide), p-toluene sulfonyl semicarbazide, barium azodicarboxylate, N,N'-dimethyl-N,N'-dinitrosoterephthalamide, trihydrazino triazine, and other azo, N-nitroso, carbonate, and sulfonyl hydrazides. There are also various acid/bicarbonate mixtures that decompose into gases when heated. For example, mixtures of citric acid and sodium bicarbonate sold under the name HYDROCEROL(R) can be employed as chemical co-blowing agents.

The total amount of the blowing agent in the polymeric formulation used to prepare the thermoplastic polymer foam structures depends on conditions such as temperature and pressure under which the blowing agent is dissolved in the polymer, the chemical and thermophysical characteristics of the blowing agent being used, and the desired density and associated properties such as insulation value, weight to strength ratio, compressive strength, etc. of the foamed article. The polymeric formulation or foaming formulation is defined herein as including the blowing agent(s), polymer resin(s), and any additives. For a foam having a density of from about 1 to about 15 1b/ft³, the formulation typically includes from about 18 to about 1 wt % of blowing agent.

The blowing agent used in the present invention includes 100% methyl formate, or the blowing agent can be a blend including 99 mol % or less methyl formate in combination with one or more co-blowing agent(s), which can be a physical co-blowing agent, a chemical co-blowing agent, or a combination thereof. The blowing agent blend generally includes from about 1 mol % to about 99 mol % methyl formate, for example from about 5 mol % to about 75 or 80 mol % methyl formate, or from about 20 mol % to about 80 mol % methyl formate. The blowing agent blend more typically includes from about 20 or 25 mol % to about 60 mol % methyl formate. More specifically, the blowing agent blend preferably includes from about 20 or 25 mol % to about 50 mol % methyl formate. [0029] If provided, the blowing agent blend generally includes at least about 20 or 25 mol % of co-blowing agent(s). The blowing agent blend more typically includes from about 80 or 75 mol % to about 40 mol % of co-blowing agent(s). More specifically, the blowing agent blend preferably includes from about 80 or 75 mol % to about 50 mol % of co-blowing agent(s).

For example, and in accordance with a preferred embodiment of the present invention, the blowing agent blend includes from about 30 mol % to about 50 mol % methyl formate, and from about 70 mol % to about 50 mol % co-blowing agent.

A nucleating agent or combination of such agents can be employed in the polymeric foaming formulation for advantages such as its capability for regulating cell formation, morphology, and performance characteristics of the foamed article. The amount of nucleating agent used depends upon the desired cell size, the selected blowing agent blend, and the desired foam density, and performance characteristics of the foamed article. The nucleating agent is generally added in amounts from about 0.02 to about 2.0 wt % of the polymer resin formulation.

Some contemplated nucleating agents include inorganic materials (in small particulate form, preferably, with high aspect ratio (> 20) and particle size in the micrometer to sub-micrometer range), such as clay, talc, silica, and diatomaceous earth. For example, talc can be used from about 0.25 to about 2.0 wt % of the polymer formulation. Other examples of nucleating agents include organic nucleating agents that decompose or react at the elevated temperatures to evolve gases, such as carbon dioxide and/or nitrogen. One example is a combination of an alkali metal salt of a polycarboxylic acid with a carbonate or bicarbonate. Some examples of alkali metal salts of a polycarboxylic acid include, but are not limited to, the monosodium salt of 2,3-dihydroxy-butanedioic acid (commonly referred to as sodium hydrogen tartrate), the monopotassium salt of butanedioic acid (commonly referred to as potassium hydrogen succinate), the trisodium and tripotassium salts of 2-hydroxy-1,2,3-propanetricarboxylic acid (commonly referred to as sodium and potassium citrate, respectively), and the disodium salt of ethanedioic acid (commonly referred to as sodium oxalate), or polycarboxylic acid such as 2-hydroxy-1,2,3-propanetricarboxylic acid. Some examples of a carbonate or a bicarbonate include, but are not limited to, sodium carbonate, sodium bicarbonate, potassium carbonate, potassium bicarbonate, and calcium carbonate.

It is contemplated that mixtures of different nucleating agents can be added in the present invention. Some more desirable nucleating agents include talc, crystalline silica, and a stoichiometric mixture of citric acid and sodium bicarbonate (the stoichiometric mixture having a 1 to 100 percent concentration where the carrier is a suitable polymer). Talc can be added in a carrier or in a powder form.

If desired, a flame retardant can also be employed in the present invention. Non-limiting examples of flame retardants include bromine compounds, chloroparaffins and other chlorine compounds, antimony trioxide, and alumina trihydrates.

Further, if desired, fillers, colorants, light and heat stabilizers, antioxidants, acid scavengers, stability control agents, processing aids, extrusion aids and foaming additives can be used in making the foam.

Any of the variety of suitable extrusion system or other methods known in the art for dissolving blowing agent in polymers can be used in accordance with the present invention. One example of a suitable system and method includes, for example, a conventional two-extruder tandem system with each extruder having a single screw. Alternatively, a two-extruder tandem system in which the primary extruder is a twin screw, and the secondary extruder is a single screw can be used for extruding the foam article of the present invention. A single extruder with proper cooling can also be employed in the present invention.

According to one process of the present invention, thermoplastic polymer pellets (e.g., polystyrene) are admixed with a nucleating agent, such as talc. These materials are continuously fed into a hopper of an extruder. The feed mixture is conveyed forward by a screw within a barrel of the extruder as the components are mixed, compressed, heated, and converted to molten form. The conversion to molten form occurs prior to reaching an injection zone where the blowing agent is added. The blowing agent(s) of the present invention can be injected into the polymer formulation at a point where the polymer is in a melt state (i.e., beyond the feed zone). Each of the components of the blowing agent blend can be individually injected, either sequentially or simultaneously and in any order, into the polymer melt. Alternatively, the components of the blowing agent blend can be pre-mixed and the blend injected into the polymer melt. If a two-extruder tandem system is used, the blowing agent(s) can be injected either in the primary or the secondary extruder or some components of the formulation can be injected in the primary extruder and the remaining components in the secondary extruder.

After injecting the blowing agent, the various components in the extruder are continuously mixed to ensure a homogeneous solution of the polymer and the blowing agent. The molten solution is then conveyed into a cooling zone where additional mixing takes place. After cooling, the solution is extruded into a holding zone maintained at a temperature and pressure that prevents or inhibits foaming of the solution. The holding zone has (a) an outlet die having an orifice opening into a zone of lower pressure such as atmospheric pressure, (b) means for closing the orifice without disturbing the foamable solution within the holding zone, and (c) opening means for allowing the foamable solution to be ejected from the holding zone. An example of a holding zone is described in U.S. Pat. No. 4,323,528, Regardless of whether a holding zone is used, the solution is then extruded through a die into a lower pressure zone, such as atmospheric pressure. On exit, the extrudate is either allowed to foam or is immediately quenched to low temperatures (e.g., by contacting the extrudate with a heat exchange fluid such as water) and the solidified extrudate is chopped into small beads that can be expanded into foam structure at a later time if desired.

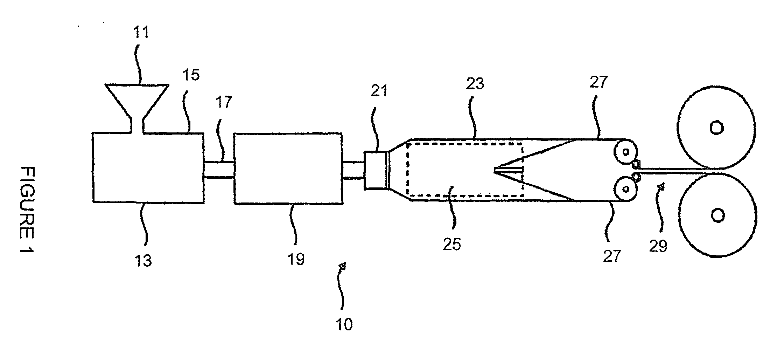

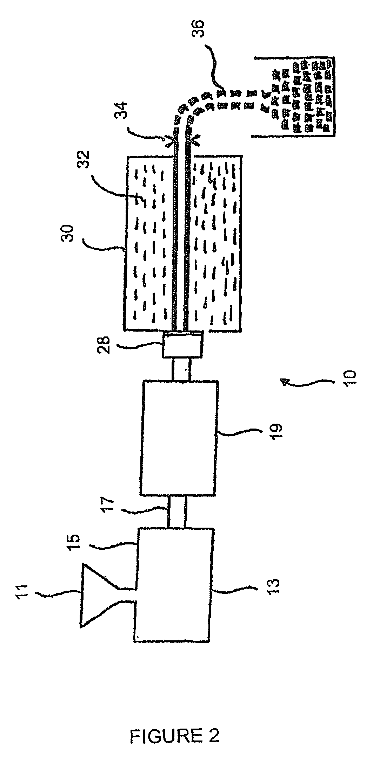

According to one embodiment as applied to alkenyl aromatic polymers such as polystyrene, a two-extruder tandem system 10 can be used for extruding a foam article (e.g., a sheet) of the present invention as depicted in FIG. 1, or for making expandable beads as depicted in FIG. 2. Polymer resin pellets are mixed with one or more additives (e.g., a nucleating agent) to form a feed mixture which is fed continuously into a hopper 11 of a primary extruder 13. The feed mixture is conveyed forward by a helical screw within the barrel of the primary extruder as the feed components are mixed, compressed, heated, and melted prior to reaching the blowing agent-injection zone. The blowing agent is added at point 15. Thus, the blowing agent of the present invention is injected at a point beyond the feed zone where the polymer exists in the melt state. If desired, the blowing agent can be injected at other locations beyond the feed zone, including into the secondary extruder.

Following injection of the blowing agent, the components are continuously mixed in the primary extruder 13. The exit pressure of the primary extruder 13 of the exemplary embodiment is generally in the range of from about 1500 to about 4000 psi (10342 - 27579 kPa. The temperature of the primary extruder 13 of the exemplary embodiment is generally in the range of from about 390 to about 475[deg.] F (199 - 246 °C. The mixture is subsequently passed, at a high enough pressure that the blowing agent remains in solution, through a hollow adapter section 17 into a cooled secondary tandem extruder 19. The molten mixture is passed along the length of the cooled secondary extruder at low shear where cooling and additional mixing occur. The exit pressure of the secondary extruder 19 of the exemplary embodiment is generally in the range of from about 1000 to about 2500 psi (6895 - 17237 kPa). The temperature of the extrudate from the secondary extruder 19 of the exemplary embodiment is generally in the range of from about 240 to about 320[deg.] F (115- 121°C). In general, the temperature of the primary extruder should be sufficient to melt the polymer and any organic additives, and to promote efficient mixing. The temperature and pressure in the secondary extruder should be sufficient to maintain a homogeneous solution of the components in the melt state. It is understood that the temperatures, pressures and other conditions described can vary depending on the properties of the thermoplastic polymer used in the process. The specific conditions to be used are apparent to a person of skill in the art.

As seen in FIG. 1, for making foam sheet, the melt is then expressed through an annular die 21 in a low pressure zone in the form of an elongated bubble or tube 23, and the foamed polymer is drawn over a cylindrical surface of a cooling and sizing drum 25, and slit to form sheet stock 27, which is taken up on one or more winding reels 29.

Alternatively, as shown in FIG. 2, for making expandable polymeric beads, the melt is expressed through a strand or rod die 28 into a low temperature zone 30 containing a heat transfer fluid 32 such as water. In this manner, the molten solution solidifies into strands, usually about 0.1 inch (0.25 cm) in diameter, without undergoing any expansion or foaming. The continuous strands then go through chopper 34 or any other cutting apparatus, and are cut into pellets (typically 0.1 inchx0.1 inch) (0.25 x 0.25 cm) to form the so-called expandable beads 36.

In another embodiment, instead of using the continuous melt process as described in FIG. 2, the expandable beads can be prepared with the blowing agent by exposing polymer pellets in the solid state to the blowing agent in a pressure vessel for a time up to the saturation limit.

This saturation step can be carried out at a slightly elevated temperature to accelerate the impregnation of the blowing agent into the solid pellets. However, the temperature should not be too high to allow the impregnated pellets to stick together. In yet another method, the impregnation of the blowing agent can be accomplished by performing the polymer synthesis in the presence of the blowing agent, so as to dissolve, impregnate or entrap the blowing agent in the polymer.

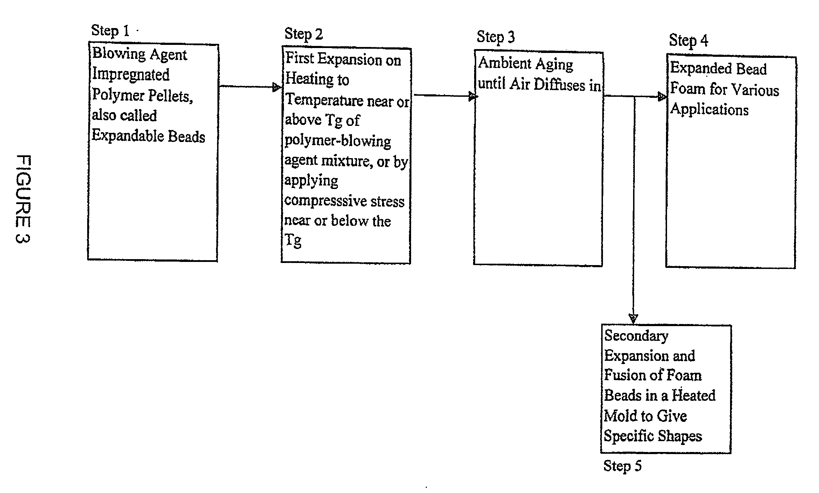

The expandable beads produced by any of the methods are then foamed as shown in FIG. 3, Step 2, by rapidly heating the beads to a temperature near or above the Tg of the polymer-blowing agent system, e.g., by contacting the impregnated pellets with steam. The impregnated pellets can also be foamed at temperatures below Tg by applying mechanical pressure (compressive stress) to induce nucleation and growth of the cells as described in U.S. Pat. No. 6,080,798. Regardless of the method used, the beads undergo rapid expansion to form foam beads (Step 2), which then undergo ambient aging (Step 3), for example by cooling the beads to ambient temperature, to allow air to diffuse into the foamed beads to stabilize the dimensions. These beads can be used as such, for example for loose fill packaging, as shown in Step 4. Alternatively, the expanded and aged beads can be fused together in a heated mold as shown in Step 5, to form products of any of a variety of different shapes such as cups, plates, molded packaging, containers, planks or boards. Further density reduction occurs during the molding operation with air and the residual blowing agent in the expanded bead providing further expansion.

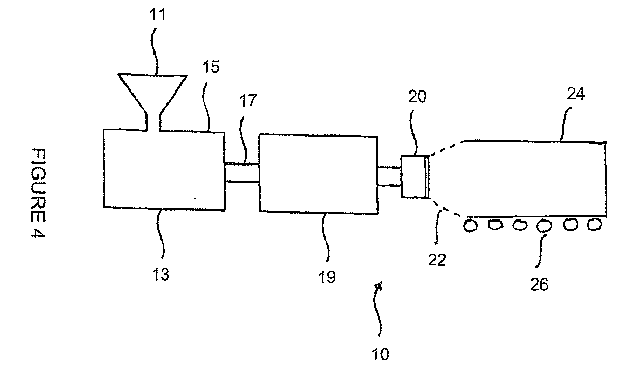

In yet another configuration, as shown in FIG. 4, the foamable formulation is expressed through a die of a different configuration such as a flat die 20 and allowed to expand in the form of a board or plank 24. The expanding extrudate 22 is moved forward by a set of rollers 26, and may be further directed to a shaping device before emerging as a board or plank 24.

Depending upon the materials and process used, the resulting foam article can be a bead, a sheet, a board, or a plank. The foam beads can be further molded to form a sheet, plank or board, or into articles of various shapes, sizes, and thickness. If the article produced is a sheet, the thickness of the sheet can be up to about 0.5 inch (1.3 cm). If the article produced is a plank or a board, the thickness is generally equal to or greater than about 0.5 inch (1.3 cm), preferably between 0.5 inch and 3 inches (1.3 - 7.6 cm).

For preparation of thermoplastic polymer foam sheets, the use of an annular die is preferred. The articles produced by extrusion through an annular die are generally less than about 0.5 inch (1.3 cm) in thickness, preferably from about 0.125 to about 0.438 inch (0.32 - 1.11 cm) in thickness. For preparation of thermoplastic polymer foam boards, e.g. insulation boards, the use of a flat die is preferred. The articles produced by extrusion through a flat die are generally at least about 0.5 inch (1.3 cm) in thickness. For example, and in a preferred embodiment, for insulating materials, the thickness is about 0.5 to about 3 inches (1.3 - 7.6 cm) in thickness. Such boards have particular utility as insulating materials, e.g. insulation boards or planks. Regardless of the type of die used or the foam produced, the extruded foam can be subjected to further expansion or density reduction by application of heat and/or vacuum.

The foam beads, sheets and boards or planks can be used as such, cut into other shapes, further shaped by application of heat and pressure, or otherwise machined or formed into shaped articles of desired size and shape as known in the art.

Depending upon the materials and process used, the resulting foamed article generally has a density from about 1 to about 15 lb/ft³, with further density reduction achieved via secondary expansion by application of heat and/or vacuum. This is typically seen in foamed beads where densities less than 1.0 lb/ft³ (16 kg/m³) are achieved. A foamed sheet typically has a density from about 2.0 to about 9.0 lb/ft³ (32 - 144 kg/m³), while a foamed board used for insulation purposes typically has a density of about 1.5 to about 3.5 lb/ft³ (24-56 kg/m³). Furthermore, and in accordance with one preferred embodiment of the invention, the resultant foamed article has a substantially closed-cell structure and is defined herein as a foam having greater than about 85% closed cells and, more typically, greater than about 95% closed cells. Alternatively, and in accordance with another aspect of the invention, the resultant foamed article can be formed with 15% or more open cells, for example 20%, 25%, 30% or more open cells. Furthermore, the resulting foam structure can be controlled to include at least about 25, 30, 35, 40, 45 or 50 cells per inch (9.8, 11.8, 13.8, 15.7, 17.7 or 19.7 cells per cm) for foam beads and sheets, and at least about 50, 55, 65, 75, 85, 95 or 100 cells per inch (21.6, 25.6, 29.5, 33.5, 37.4 and 39.4 cells per cm) for extruded boards.

The term "R-value" refers to a unit of thermal resistance used for comparing insulating values of different materials, as is known in the art. Generally, the higher the R-value the better the insulation resists heat transfer. Many factors can affect the R-value of insulation, including the type of blowing agent used and the age of the foam. R-values are usually expressed in terms of a standard unit of thickness of the material. For example, R-values for foams can be measured per inch of foam thickness. Adequate insulating foams such as the foams of the present invention preferably have R-values of about 4.0 per inch (1.6 cm) or greater. For example, and in a preferred embodiment, the insulating foams of the present invention have R-values per inch of greater than about 5 (2.0 per cm). The R value of the foams of the invention are determined by conventional methods, for example using ASTM C518.

The foams of the present invention can be used for insulation or as building materials, in various containers and packaging systems, or as protective or flexible packaging. Generally, extruded foam sheets are used in flexible as well as rigid packaging; extruded foam planks are used in protective packaging; extruded foam boards having a thickness greater than about 0.5 inch (1.3 cm) are used for insulation applications, for example as building materials; and foam beads are used for loose fill packaging, or are molded as sheets or planks or boards or contoured articles for flexible, protective, rigid, and insulation applications. In addition to foam sheets, planks and boards, the present invention can take the form of other shapes such as rods, tubes or contoured members.

Other uses for the foams of the present invention, as well as suitable processes, apparatus, equipment, devices and systems for the preparation thereof are described in U.S. Pat. Nos. and published applications 6,136,875, 5,149,473, 6,476,080, 6,599,946, 6,696,504, US 2004/0132844 and US 2004/0006149.

Dimensional stability is usually expressed in terms of % gauge change, which equals 100 x (aged gauge-initial gauge)/initial gauge, with initial gauge determined within 15 minutes of extrusion. The resulting foam of the present invention is desirably "dimensionally stable" in that the gauge of the foam after 7 days of aging does not change by more than about 15%, preferably not more than 10%, and more preferably not more than 5% from the gauge of the freshly extruded foam. Preferably, the foams of the invention have a dimensional change of less than about 4%, more preferably less than about 1% in any direction.

The following examples are presented in order to more fully illustrate certain embodiments of the invention. These example in no way, however, should be construed as limiting the broad scope of the invention. One skilled in the art can readily devise many variations and modifications of the principles disclosed herein without departing from the scope of the invention.

### EXAMPLES

### Example A

Various blowing agents were tested with the results shown below in Table 1. Specifically, various alkenyl aromatic polymer foam sheets were made from comparative blowing agents and inventive blowing agents in accordance with the extrusion process generally described herein. It should be noted that for the various examples reported in Table 1, each exemplary foam was made with the same polymer and the same hardware operated in exactly the same way; the only variable being the blowing agent. All of the inventive blowing agents included methyl formate; the comparative blowing agent(s) did not include methyl formate.

Each of the alkenyl aromatic polymer foams was made on a tandem extrusion line employing 2.5 inch and 3.5 inch single screw extruders and blowing agent was injected through a single port in the primary extruder. The polymer resin used was high heat general purpose polystyrene having a density of 1.05 g/cm < 3 3 > and a melt flow rate of 1.6 g/10 min at 200[deg.] C. under a load of 5 kg. In addition to the blowing agents and the polystyrene resin, talc was added in the amount of up to 2 wt % of the total foaming formulation including all the blowing agent(s), polymer resin(s), and additives. An annular die was used and the expanding extrudate was directed to a shaping system to form foam sheets. An example of suitable equipment for preparing the alkenyl aromatic polymer foam sheets is described in U.S. Pat. No. 6,136,875.

**Table 1**

| Sample | Blowing Agent(s) Used (wt%)¹ | | | | | | | | Talc | Density | Open Cell | Cell Size⁴ | %Gauge Change⁵ | |
|---|---|---|---|---|---|---|---|---|---|---|---|---|---|---|
| Comp/Inv 2 | Ethane | Propane | Isobutane | n-Butane | Isopentane | CO2 | MF³ | H₂ O | wt%¹ | lb/ft³ | % | µm | 1 hour | 7 days |
| Comp 1 | | | | | 5.20 | | | | 1.8 | 5.5 | 1.8 | 200 | 0.8 | 11.1 |
| Comp 2 | | | | | 3.96 | 0.77 | | | 1.0 | 4.7 | 1.0 | 196 | -7.9 | 12.9 |
| Inv 1 | | | 4.30 | 4.30 | 4.30 | 4.30 | 4.30 | | 1.9 | 8.1 | 2.2 | 187 | -0.3 | 5.6 |
| Inv 2 | | | | | | 0.76 | 3.32 | | 0.5 | 5.6 | 5.6 | 209 | -10.6 | -3.9 |
| Inv 3 | | | | | | 0.50 | 1.95 | 0.50 | 0.7 | 8.6 | 23.5 | 170 | -0.3 | 21.7 |
| Inv 4 | 0.56 | | | | | | 3.52 | | 0.7 | 5.8 | 2.2 | 234 | -1.1 | 4.7 |
| Inv 5 | 1.00 | | | | | | 2.40 | | 0.6 | 4.1 | 1.8 | 179 | -0.1 | 7.6 |
| Inv 6 | | 1.22 | | | | 0.55 | 1.97 | | 0.5 | 4.4 | 3.0 | 210 | -6.6 | 9.0 |
| Inv 7 | | 2.01 | | | | 0.37 | 1.21 | | 0.3 | 3.6 | 1.5 | 224 | 0.1 | 15.1 |
| Inv 8 | | 2.67 | | | | 0.34 | 0.34 | | 0.3 | 3.5 | 3.5 | 254 | 0.6 | 9.5 |
| Inv 9 | | | 3.57 | | | 0.35 | 0.27 | | 1.0 | 4.1 | 1.8 | 194 | 0.1 | 11.9 |
| Inv 10 | | | 3.04 | | | 0.35 | 0.74 | 1.0 | 1.0 | 4.0 | 1.9 | 197 | -0.3 | 13.2 |
| Inv 11 | | | 2.65 | | | 0.31 | 1.17 | 1.0 | 1.0 | 3.9 | 0.9 | 166 | 0.5 | 13.7 |
| Inv 12 | | | 2.03 | | | 0.37 | 1.82 | | 1.0 | 4.9 | 2.5 | 183 | -3.5 | 22.1 |
| Inv 13 | | | | | 2.79 | 0.78 | 1.00 | | 1.0 | 5.3 | 3.0 | 180 | -5.5 | 10.7 |
| Inv 14 | | | | 2.63 | | 0.35 | 1.20 | | 1.4 | 4.7 | 1.7 | 163 | -7.7 | 18.4 |

The densities shown in the table, when expressed in SI units (kgs/m³) are respectively (as read down the table); 88.5, 76.5, 130.3, 90.1, 138.4, 93.3, 66.0, 70.8, 57.9, 56.3, 66.0, 64.4, 62.75, 78.8, 85.3, 75.6.
1. wt% = (weight of a component)/)total weight of foaming formulation including all the blowing agent(s(, polymer resin(s), and additives.
2. Comp - comparative example; inv - inventive example
3. MF - methyl formate
4. The number of cells per inch of the extruded foam ranged from 210 to 420 (84 to 167 cells per cm. Cell size (expressed as diameter) was determined from scanning electron microscope image of the extruded sheet that has aged at least 24 hours and then expanded in the z-direction (along the thickness direction) in a 240°F 115°C oil bath for 2 minutes, being mechanically constrained in the x and y directions; the number of cells per inch in these further expanded samples ranged from 110 to 210 (44 to 84 cells per cm).
5. % Gauge Change = 100 x (aged gauge - initial gauge) initial gauge; initial gauge determined within 15 minutes of extrusion

All of the above foams of Table 1 were dimensionally stable because after having undergone aging for 7 days no further significant change in the gauge was showed post-extrusion growth. This unidirectional change is different from the conventionally used definition of dimensional stability whereby the foam can either shrink or expand with time. The formulations described herein provide stable foam structures produced by an environmentally friendly and cost-effective process. Furthermore, a variety of foams having suitable and desired characteristics can be formed in accordance with the present invention. For example, inventive formulation 3 contains the highest percentage of open cells, and is thus advantageous since the flammable properties of the foam are reduced as the percentage of open cells increases due to rapid loss of the flammable component(s) of blowing agent blend. In another example, inventive formulations 2 to 5 include components with the least and negligible impact on air quality. Comparative example 2 is a typical formulation widely used in making polystyrene foam sheet or expanded beads. Other variants of this formulation, again in wide use, are where isopentane is replaced with normal pentane or isobutane or normal butane. Inventive examples 6 to 14 demonstrate how foam sheet (and, by extension, expanded beads) with similar characteristics can be made using formulation where the use of the hydrocarbon VOC blowing agent is much reduced. A widely used blowing agent for making expanded beads is pentane, which has a boiling point of 36°C. and a heat of vaporization of 25.8 kJ/mol at the boiling point; the corresponding values for methyl formate are 32°C. and 27.9 kJ/mol, respectively. The combination of lower boiling point and higher heat of vaporization for methyl formate corresponds to higher volatility and thus gives better expansion than pentane. Consequently, partial or complete replacement of pentane with methyl formate leads to a significant reduction in VOC emissions during the expanded bead formation (FIG. 3, Step 2) and molding (FIG. 3, Step 5) operations, and from post-manufacturing operations such as foam or product storage.

Furthermore, it should be noted that the total number of moles of the blowing agent in all the formulations in Table 1 is the same (about 0.07 moles per 100 g of total material processed). The attainment of foams with different densities thus simply reflects the effective volatility of the blowing agent blend. It will be obvious to one skilled in the art that foams with lower densities can be obtained by changing the composition of the blowing agent blend and making it rich in the component(s) with higher volatility, and that the density can be further reduced by using more number of moles of the blowing agent. Each of the inventive formulations of Table 1 gives rise to a foam that is stable and easy to manufacture and handle.

### Example B

Various blowing agents for use in forming insulating foam planks or boards were tested with the results shown below in Table 2. Specifically, various alkenyl aromatic polymer foam boards useful for insulation applications were made from inventive blowing agent blends in accordance with the extrusion process generally described herein. It should be noted that for the various examples reported in Table 2, each exemplary foam board was made with the same hardware operated in exactly the same way; the only variable being the composition of the blowing agent blend and the relative percentages of the polystyrene polymer. All of the inventive blowing agent blends include methyl formate in combination with the co-blowing agent HFC-134a.

Each of the alkenyl aromatic polymer foams was made on a tandem extrusion line employing 1.0" and 1.5" (2.54 cm and 3.81 cm) single-screw extruders equipped with three ports in the primary extruder for injecting compressed fluids. The output rate was 10 lb/hr (76 grammes/second) . The polymer samples used were high heat general purpose polystyrene having a melt flow rate of 1.6 (PS1), high heat general purpose polystyrene having a melt flow rate of 11 (PS2), and polystyrene reclaimed from Applicant's commercial insulation board process having a melt flow rate of 11.5 (PS3). Talc was added in the amount up to about 2.5% of the amount of virgin polystyrene (PS1 + PS2). A flat die was used and the expanding extrudate was directed to a shaping system to form foam boards with nominal dimensions of 5.0" (width) x 0.5" (thickness) (12.7 cm x 1.3 cm). The adjustable shaping device used can be configured to create a preferential orientation of the cells in the normal direction, as seen in Table 2.

Table 2 provides various exemplary formulations used to prepare insulating foam boards from an extrudate including polystyrene, talc, methyl formate, HFC-134a and optionally CO2, in accordance with the present invention. Additionally, Table 2 provides the melt temperature of each of the foaming formulations prior to extrusion. Table 2 also provides the density, R-value, and cell size of the corresponding board or plank formed from the various exemplary formulations.

**Table 2**

| *Inventive Example* | *1* | *2* | *3* | *4* | *5* | *6* | *7* | *8* |
|---|---|---|---|---|---|---|---|---|
| PS1 (wt%)¹ | 99.00 | 66.00 | 66.00 | 66.00 | 66.00 | 66.00 | 66.00 | 50.00 |
| PS2 (wt%)¹ | 0.00 | 32.35 | 0.00 | 0.00 | 0.00 | 0.00 | 0.00 | 0.00 |
| PS3 (wt%)¹ | 0.00 | 0.00 | 32.35 | 32.35 | 32.68 | 32.68 | 32.68 | 50.00 |
| Talc (wt%)¹ | 1.00 | 1.65 | 1.65 | 1.65 | 1.32 | 1.32 | 1.32 | 0.00 |
| Methyl Formate (pph)² | 2.42 | 2.61 | 3.42 | 4.72 | 4.07 | 4.24 | 3.95 | 3.73 |
| HFC-134a (pph)² | 2.01 | 2.73 | 5.17 | 4.72 | 3.99 | 5.50 | 6.17 | 5.83 |
| CO₂ (pph)² | 0.00 | 0.00 | 0.00 | 0.00 | 0.36 | 0.00 | 0.00 | 0.00 |
| Melt temp (°C)³ | 149 | 141 | 131 | 121 | 122 | 121 | 120 | 121 |
| Fresh Density (pcf)^{4,5} | 3.88 | 3.15 | 2.70 | 2.52 | 2.67 | 2.67 | 2.86 | 2.70 |
| Fresh R-Value (/inch)^{4,6} | 5.31 | 5.80 | 5.82 | 6.11 | 5.82 | 6.02 | 6.15 | 6.10 |
| 7-day R-value (/inch)⁶ | 4.36 | 4.63 | 4.64 | 4.78 | 4.65 | 4.84 | 5.01 | 4.94 |
| Cell size, MD (mm)^{7,8} | 0.222 | 0.181 | 0.221 | 0.246 | 0.223 | 0.212 | 0.192 | 0.236 |
| Cell size, TD (mm)^{7,8} | 0.245 | 0.224 | 0.234 | 0.223 | 0.229 | 0.197 | 0.267 | 0.285 |
| Cell size, ND (mm)^{7,8} | 0.274 | 0.221 | 0.258 | 0.259 | 0.253 | 0.217 | 0.245 | 0.250 |
| | | | | | | | | |
| 1. wt% = weight of component / weight of (PS1 + PS2 + PS3 + talc) | | | | | | | | |
| 2. pph = parts blowing agent component per hundred parts of (PS1 + PS2 + PS3 + talc) | | | | | | | | |
| 3. The temperature just before the foaming formulation enters the die | | | | | | | | |
| 4. Fresh measurements made within 15 minutes of extrusion | | | | | | | | |
| 5. Determined by measuring dimensions and mass of a nominal 4" x 15" x 0.5" *sample | | | | | | | | |
| 6. R is in ft². hr. °FBtu. Thermal resistivity determined using ASTM C518 | | | | | | | | |
| 7. Cell size determined using ASTM D3576 | | | | | | | | |
| 8. MD, TD, and ND - machine, transverse, and normal direction, respectively | | | | | | | | |

| | | | | | | | | |
|---|---|---|---|---|---|---|---|---|
| *(10.2 cm x 38.1 cm x 1.6 cm) | | | | | | | | |

The fresh R-values given in the table are, when expressed in SI units (per cm), respectively; 2.09, 2.28, 2.29, 2.41, 2.29, 2.37, 2.42, 2.40. The 7-day R-value given in the table are, when expressed in SI units (per cm), respectively; 1.71, 1.82, 1.83, 1.88, 1.83, 1.91, 1.97, 1.94.

The fresh densities given in the table are when expressed in SI units (kgs/m³), respectively; 62.16, 50.46, 43.25, 40.37, 42.77, 45.82, 43.25.

All of the foam boards of Table 2 were dimensionally stable. The dimensions were measured within 15 minutes of extrusion and then after 14 and 28 days. The change in any given dimension was less than 1% and the overall change in density with respect to the fresh density was within 2%.

In accordance with another aspect of the present invention, and in addition to the benefits of using methyl formate as a blowing agent previously set forth, such as offsetting the undesired impact associated with blowing agents in current use, the use of methyl formate provides an additional advantage. Namely, methyl formate escapes the foam quite rapidly. About 12% of the methyl formate escaped the 0.5" thick board within the first 3 hours following extrusion, and none was detected after 30 days using a limit of detection of 500 ppm. Because methyl formate is the only flammable necessary in the polymeric foaming formulation. Ethane can be substituted for CO2. Although ethane is flammable, it also escapes the foam matrix rapidly, again not requiring the use of flame retardant.

### Example C

Various blowing agents for use in forming insulating foam planks or boards were tested with the results shown below in Table 3. Specifically, various alkenyl aromatic polymer foam boards useful for insulation applications were made from comparative blowing agent and inventive blowing agent blends, in accordance with the extrusion process generally described herein. The comparative blowing agent blend includes ethyl chloride-a VOC and HAP blowing agent, in combination with the non-VOC co-blowing agent HCFC-142b, and the inventive blowing agent blend includes methyl formate, a non-VOC and non-HAP blowing agent, in combination with HCFC-142b.

It should be noted that for the various examples reported in Table 3, each exemplary foam board was made with there same hardware operated in exactly the same way; the only variable being the composition of the blowing agent blend. Each of the alkenyl aromatic polymer foams was made on a tandem extrusion line employing 1.0" and 1.5" (2.54 and 3.81 cm) single-screw extrudes equipped with three ports in the primary extruder for injecting compressed fluids. The output rate was 10 lb/hr 76 grammes/second). The polymer samples used were high heat general purpose polystyrene having a melt flow rate of 1.6 (PS1), and reclaimed polystyrene from Applicant's commercial insulation board process having a melt flow rate of 11.5 (PS3). Talc was added in the amount of about 2.0% of the amount of polystyrene (PS1+PS3). A flat die was used and the expanding extrudate was directed to a shaping system to form foam boards with nominal dimensions of 5.0" (width) x 0.5" (thickness) (12.7 cm x 1.3 cm).

Table 3 provides various exemplary inventive formulations used to prepare insulation foam boards from an extrudate including polystyrene, talc, methyl formate and HFC-142b, in accordance with the present invention. Also shown are several comparative formulations including polystyrene, talc, ethyl chloride and HFC-142b. Additionally, Table 3 provides the melt temperature of each of the comparative and inventive foaming formulations prior to extrusion. Table 3 also provides the density, R-value, and cell size of the corresponding board or plank formed from the various exemplary comparative and inventive formulations.

**Table 3**

| *Example* | *Comp* | *Comp* | *Comp* | *Comp* | *Comp* | *Inv* | *Inv* | *Inv* | *Inv* | *Inv* |
|---|---|---|---|---|---|---|---|---|---|---|
| PS1 (wt%)¹ | 58.00 | 58.00 | 58.00 | 58.00 | 58.00 | 58.00 | 58.00 | 58.00 | 58.00 | 58.00 |
| PS3 (wt%)¹ | 38.00 | 38.00 | 38.00 | 38.00 | 38.00 | 38.00 | 38.00 | 38.00 | 38.00 | 38.00 |
| FR (wt%)¹ | 2.00 | 2.00 | 2.00 | 2.00 | 2.00 | 2.00 | 2.00 | 2.00 | 2.00 | 2.00 |
| Talc (wt%)¹ | 2.00 | 2.00 | 2.00 | 2.00 | 2.00 | 2.00 | 2.00 | 2.00 | 2.00 | 2.00 |
| Ethyl Chloride (pph)² | 2.35 | 2.58 | 2.68 | 2.69 | 2.81 | 0.00 | 0.00 | 0.00 | 0.00 | 0.00 |
| Methyl Formate (pph)² | 0.00 | 0.00 | 0.00 | 0.00 | 0.00 | 2.17 | 2.35 | 2.63 | 2.61 | 2.92 |
| HCFC-142b (pph)² | 5.48 | 6.01 | 6.24 | 6.27 | 6.43 | 5.64 | 6.06 | 6.68 | 6.64 | 6.74 |
| Melt temp (°C)³ | 127 | 127 | 127 | 126 | 126 | 133 | 136 | 136 | 126 | 126 |
| Fresh Density (pcf)^{4,5} | 2.31 | 2.29 | 2.12 | 2.02 | 2.12 | 2.23 | 2.12 | 1.86 | 2.13 | 2.10 |
| Fresh R-Value (/inch)^{4,6} | 6.19 | 6.13 | 6.06 | 6.02 | 6.06 | 6.04 | 5.91 | 5.71 | 6.17 | 6.06 |
| 7-day R-value (/inch)⁶ | 4.94 | 4.96 | 4.91 | 4.85 | 4.90 | 4.76 | 4.69 | 4.57 | 4.95 | 4.85 |
| Cell size, MD (mm)^{7,8} | 0.361 | 0.337 | 0.386 | 0.340 | 0.330 | 0.304 | 0.366 | 0.421 | 0.369 | 0.379 |
| Cell size, TD (mm)^{7,8} | 0.447 | 0.407 | 0.482 | 0.428 | 0.407 | 0.428 | 0.399 | 0.423 | 0.474 | 0.393 |
| Cell size, ND (mm)^{7,8} | 0.376 | 0.376 | 0.406 | 0.390 | 0.389 | 0.414 | 0.411 | 0.464 | 0.450 | 0.414 |
| | | | | | | | | | | |
| *Comp* - comparative example | | | | | | | | | | |
| *Inv* - inventive example | | | | | | | | | | |
| 1. wt% = weight of component / weight of (PS1 + PS3 + FR + Talc); FR is flame retardant hexabromocyclododecane | | | | | | | | | | |
| 2. pph = parts blowing agent component per hundred parts of (PS1 + PS3 + FR + Talc) | | | | | | | | | | |
| 3. The temperature just before the foaming formulation enters the die | | | | | | | | | | |
| 4. Fresh measurements made within 15 minutes of extrusion | | | | | | | | | | |
| 5. Density determined by measuring dimensions and mass of a nominal 4" x 15" x 0.5" sample * | | | | | | | | | | |
| 6. R is in ft². hr. °F/Btu. Thermal resistivity determined using ASTM C518 | | | | | | | | | | |
| 7. Cell size determined using ASTM D3576 | | | | | | | | | | |
| 8. MD, TD, and ND - machine, transverse, and normal direction, respectively | | | | | | | | | | |

The fresh R-values given in the table are, when expressed in SI units (per cm) respectively; 2.44, 2.41, 2.39, 2.37, 2.39, 2.38, 2.33, 2.25, 2.42, 2.39. The 7-day R-values given in the table are, when expressed in SI units (per cm), respectively; 1.94, 1.95, 1.93, 1.91, 1-93, 1.87, 1.85, 1.80, 1.95, 1.91.
^{*}(10.2cmx38.lcmxl.6cm)

The fresh densities given in the table are, when expressed in SI units (kgs/ m³), respectively; 37.01, 31.69, 33.96, 32.36, 33.96, 35.72, 33.96, 29.80, 34.12, 33.64.
All of the foam boards of Table 3 were dimensionally stable.

The dimensions were measured within 15 minutes of extrusion and then after 14 and 28 days. The change in any given dimension was less than 1% and the overall change in density with respect to the fresh density was within 2%.

The results presented in Table 3 demonstrate that the non-VOC methyl formate can replace hazardous blowing agents such as ethyl chloride, without sacrificing process efficiency and product characteristics, such as density, cell size and R-values. The inventive blowing agent blends thus offer significant advantages as compared with presently used blowing agent blends. Though Examples B and C have been described in terms of extruded boards, similar products can be made using expandable beads and the processes shown in FIGS. 2 and 3 without departing from the formulations shown in Tables 2 and 3.

## Claims

1. A blowing agent formulation for forming a foam article comprising:
methyl formate; and
at least one co-blowing agent selected from the group consisting of:
1,1,1,2-tetrafluoroethane (HFC-134a), carbon dioxide and a combination thereof.

2. A blowing agent formulation according to claim 1 for forming a foam article comprising:
methyl formate; and at least one co-blowing agent selected from the group consisting of:
1,1,1,2-tetrafluoroethane (HFC-134a), carbon dioxide and a combination thereof; and
at least one further co-blowing agent selected from the group consisting of hydrocarbon, methyl fluoride, difluoromethane (HFC-32), trifluoromethane (HFC-23), perfluoromethane, chlorodifluoromethane (HCFC-22), methylene chloride, ethyl chloride, ethyl fluoride, 1,2-difluoroethane (HFC-152), 1,1-difluoroethane (HFC-152a), 1,1,1-trifluoroethane (HFC-143a), pentafluoroethane (HFC-125), perfluoroethane, 1,1-dichloro-1-fluoroethane (HCFC-141 b), 1-chloro-1,1-difluoroethane (HCFC-142b), 1,1-dichloro-2,2,2-trifluoroethane (HCFC-123), and 1-chloro-1,2,2,2-tetrafluoroethane (HCFC-124), difluoropropane, 1,1,1-trifluoropropane, 1,1,1,3,3-pentafluoropropane (HFC-245fa), 1,1,1,2,3,3-hexafluoropropane (HFC-236ea), 1,1,1,2,3,3,3-heptafluoropropane (HFC-227ea), perfluoropropane, 2,2,4,4,4-pentafluorobutane (HFC-365mfc), perfluorobutane, perfluorocyclobutane, vinyl fluoride, an ester, an acetal, an alkanol, a carbonate, an amine, a ketone, an inorganic agent and a chemical blowing agent.

3. The blowing agent formulation of claim 2, wherein the at least one further co-blowing agent comprises hydrocarbon.

4. The blowing agent formulation of claim 3, wherein the hydrocarbon is a C2 to C5 hydrocarbon.

5. The blowing agent formulation of claim 4, wherein the hydrocarbon is isobutene, isopentane, or cyclopentane.

6. The blowing agent formulation of any of claims 1 to 5, wherein the at least one co-blowing agent comprises carbon dioxide.

7. The blowing agent formulation of any of claims 1to 6, wherein the at least on co-blowing agent comprises 1,1,1,2-tetrafluoroethane (HFC-134a).

8. A blowing agent formulation for forming a foam article comprising:
methyl formate; and
hydrocarbon; and carbon dioxide

9. The blowing agent formulation of claim 8, wherein the hydrocarbon is a C2 to C5 hydrocarbon.

10. The blowing agent formulation of claim 9, wherein the hydrocarbon is isobutene, isopentane or cyclopentane.

11. The blowing agent formulation of any of claims 8 to 10, further comprising 1,1,1,2-tetrafluoroethane (HFC-134a).

12. A blowing agent formulation for forming a foam article comprising:
methyl formate; and
1,1,1.2-tetrafluoroethane (HFC-134a).

13. The blowing agent formulation of claim 12, further comprising hydrocarbon.

14. The blowing agent formulation of claim 13, wherein the hydrocarbon is a C2 to C5 hydrocarbon.

15. The blowing agent formulation of claim 14, wherein the hydrocarbon is isobutene, isopentane or cyclopentane.

16. A blowing agent formulation for forming a foam article comprising:
methyl formate; and
carbon dioxide.

17. The blowing agent formulation of claim 16, further comprising hydrocarbon.

18. The blowing agent formulation of claim 17, wherein the hydrocarbon is a C2 to C5 hydrocarbon.

19. The blowing agent formulation of claim 18, wherein the hydrocarbon is isobutene, isopentane or cyclopentane.

## Patentansprüche

1. Eine Blähmittelformulierung zur Bildung eines Gegenstands aus Schaum bestehend aus:
Methylformiat; und
zumindest einem zusätzlichen Blähmittel, das aus der Gruppe bestehend aus Folgenden ausgewählt wird:
1,1,1,2-Tetrafluorethan (HFC-134a), Kohlendioxid und einer Kombination dieser.

2. Eine Blähmittelformulierung entsprechend Anspruch 1 zur Bildung eines Gegenstands aus Schaum bestehend aus:
Methylformiat; und
zumindest einem zusätzlichen Blähmittel, das aus der Gruppe bestehend aus Folgenden ausgewählt wird:
1,1,1,2-Tetrafluorethan (HFC-134a), Kohlendioxid und einer Kombination dieser; und
zumindest einem weiteren zusätzlichen Blähmittel, das aus der Gruppe bestehend aus folgenden ausgewählt wird, nämlich Kohlenwasserstoff, Methylfluorid, Difluormethan (HFC-32), Trifluormethan (HFC-23), Perfluormethan, Chlordifluormethan (HCFC-22), Methylenchlorid, Ethylchlorid, Ethylfluorid, 1,2,-Difluorethan (HFC-152), 1,1-Difluorethan (HFC-152a), 1,1,1-Trifluorethan (HFC-143a), Pentafluorethan (HFC-125), Perfluorethan, 1,1-Dichlor-1-Fluorethan (HCFC-141b), 1-Chlor-1,1-Difluorethan (HCFC-142b), 1,1-Dichlor-2,2,2-Trifluorethan (HCFC-123) und 1-Chlor-1,2,2,2-Tetrafluorethan (HCFC-124), Difluorpropan, 1,1,1-Trifluorpropan, 1,1,1,3,3-Pentafluorpropan (HFC-245fa), 1,1,1,2,3,3-Hexafluorpropan (HFC-236ea), 1,1,1,2,3,3,3-Heptafluorpropan (HFC-227ea), Perfluorpropan, 2,2,4,4,4-Pentafluorbutan (HFC-365mfc), Perfluorbutan, Perfluorcyclobutan, Vinylfluorid, einem Ester, einem Acetal, einem Alkanol, einem Carbonat, einem Amin, einem Keton, einem anorganischen Mittel und einem chemischen Blähmittel.

3. Die Blähmittelformulierung entsprechend Anspruch 2, wobei das zumindest eine zusätzliche Blähmittel Kohlenwasserstoff ist.

4. Die Blähmittelformulierung entsprechend Anspruch 3, wobei der Kohlenwasserstoff ein C2- bis C5-Kohlenwasserstoff ist.

5. Die Blähmittelformulierung entsprechend Anspruch 4, wobei der Kohlenwasserstoff Isobuten, Isopentan oder Cyclopentan ist.

6. Die Blähmittelformulierung entsprechend einem der Ansprüche 1 bis 5, wobei das zumindest eine zusätzliche Blähmittel Kohlendioxid ist.

7. Die Blähmittelformulierung entsprechend einem der Ansprüche 1 bis 6, wobei das zumindest eine zusätzliche Blähmittel 1,1,1,2-Tetrafluorethan (HFC-134a) ist.

8. Eine Blähmittelformulierung zur Bildung eines Gegenstands aus Schaum bestehend aus:
Methylformiat; und
Wasserstoff; und Kohlendioxid.

9. Die Blähmittelformulierung entsprechend Anspruch 8, wobei der Kohlenwasserstoff ein C2- bis C5-Kohlenwasserstoff ist.

10. Die Blähmittelformulierung entsprechend Anspruch 9, wobei der Kohlenwasserstoff Isobuten, Isopentan oder Cyclopentan ist.

11. Die Blähmittelformulierung entsprechend einem der Ansprüche 8 bis 10, das zudem 1,1,1,2-Tetrafluorethan (HFC-134a) umfasst.

12. Eine Blähmittelformulierung zur Bildung eines Gegenstands aus Schaum bestehend aus:
Methylformiat; und
1,1,1,2-Tetrafluorethan (HFC-134a).

13. Die Blähmittelformulierung entsprechend Anspruch 12, die zudem Kohlenwasserstoff umfasst.

14. Die Blähmittelformulierung entsprechend Anspruch 13, wobei der Kohlenwasserstoff ein C2- bis C5-Kohlenwasserstoff ist.

15. Die Blähmittelformulierung entsprechend Anspruch 14, wobei der Kohlenwasserstoff Isobuten, Isopentan oder Cyclopentan ist.

16. Eine Blähmittelformulierung zur Bildung eines Gegenstands aus Schaum bestehend aus:
Methylformiat; und
Kohlendioxid.

17. Die Blähmittelformulierung entsprechend Anspruch 16, die zudem Kohlenwasserstoff umfasst.

18. Die Blähmittelformulierung entsprechend Anspruch 17, wobei der Kohlenwasserstoff ein C2- bis C5-Kohlenwasserstoff ist.

19. Die Blähmittelformulierung entsprechend Anspruch 18, wobei der Kohlenwasserstoff Isobuten, Isopentan oder Cyclopentan ist.

## Revendications

1. Une formulation d'agent gonflant destinée à la formation d'un article en mousse contenant :
formiate de méthyle, et
au moins un co-agent gonflant sélectionné dans le groupe se composant de :
1,1,1,2-tétrafluoroéthane (HFC-134a), dioxyde de carbone et une combinaison de ceux-ci.

2. Une formulation d'agent gonflant selon la revendication 1 destinée à la formation d'un article en mousse contenant :
formiate de méthyle, et
au moins un co-agent gonflant sélectionné dans le groupe se composant de :
1,1,1,2-tétrafluoroéthane (HFC-134a), dioxyde de carbone et une combinaison de ceux-ci, et
au moins un autre co-agent gonflant sélectionné dans le groupe se composant de hydrocarbure, fluorure de méthyle, difluorométhane (HFC-32), trifluorométhane (HFC-23), perfluorométhane, chlorodifluorométhane (HCFC-22), chlorure de méthylène, chlorure d'éthyle, fluorure d'éthyle, 1,2-difluoroéthane (HFC-152), 1,1-difluoroéthane (HFC-152a), 1,1,1-trifluoroéthane (HFC-143a), pentafluoroéthane (HFC-125), perfluoroéthane, 1,1-dichloro-1-fluoroéthane (HCFC-141b), 1-chloro-1,1-difluoroéthane (HCFC-142b), 1,1-dichloro-2,2,2-trifluoroéthane (HCFC-123), et 1-chloro-1,2,2,2-tétrafluoroéthane (HCFC-124), difluoropropane, 1,1,1-trifluoropropane, 1,1,1,3,3-pentafluoropropane (HFC-245fa), 1,1,1,2,3,3-hexafluoropropane (HFC-236ea), 1,1,1,2,3,3,3-heptafluoropropane (HFC-227ea), perfluoropropane, 2,2,4,4,4-pentafluorobutane (HFC-365mfc), perfluorobutane, perfluorocyclobutane, fluorure de vinyle, un ester, un acétal, un alcanol, un carbonate, un amine, un cétone, un agent inorganique et un agent gonflant chimique.

3. La formulation d'agent gonflant selon la Revendication 2, où le au moins un autre co-agent gonflant contient un hydrocarbure.

4. La formulation d'agent gonflant selon la Revendication 3, où l'hydrocarbure est un hydrocarbure C2 à C5.

5. La formulation d'agent gonflant selon la Revendication 4, où l'hydrocarbure est isobutène, isopentane ou cyclopentane.

6. La formulation d'agent gonflant selon l'une quelconque des Revendications 1 à 5, où le au moins un co-agent gonflant contient du dioxyde de carbone.

7. La formulation d'agent gonflant selon l'une quelconque des Revendications 1 à 6, où le au moins un co-agent gonflant contient 1,1,1,2-tétrafluoroéthane (HFC-134a).

8. Une formulation d'agent gonflant destinée à la formation d'un article en mousse contenant :
formiate de méthyle, et
hydrocarbure, et dioxyde de carbone

9. La formulation d'agent gonflant selon la Revendication 8, où l'hydrocarbure est un hydrocarbure C2 à C5.

10. La formulation d'agent gonflant selon la Revendication 9, où l'hydrocarbure est isobutène, isopentane ou cyclopentane.

11. La formulation d'agent gonflant selon l'une quelconque des Revendications 8 à 10, contenant en outre 1,1,1,2-tétrafluoroéthane (HFC-134a).

12. Une formulation d'agent gonflant destinée à la formation d'un article en mousse contenant :
formiate de méthyle, et
1,1,1,2-tétrafluoroéthane (HFC-134a).

13. La formulation d'agent gonflant selon la Revendication 12, contenant en outre un hydrocarbure.

14. La formulation d'agent gonflant selon la Revendication 13, où l'hydrocarbure est un hydrocarbure C2 à C5.

15. La formulation d'agent gonflant selon la Revendication 14, où l'hydrocarbure est isobutène, isopentane ou cyclopentane.

16. Une formulation d'agent gonflant destinée à la formation d'un article en mousse contenant :
formiate de méthyle, et
dioxyde de carbone.

17. La formulation d'agent gonflant selon la Revendication 16, contenant en outre un hydrocarbure.

18. La formulation d'agent gonflant selon la Revendication 17, où l'hydrocarbure est un hydrocarbure C2 à C5.

19. La formulation d'agent gonflant selon la Revendication 18, où l'hydrocarbure est isobutène, isopentane ou cyclopentane.
